(19) **Europäisches Patentamt**
**European Patent Office**
**Office européen des brevets**

(11) **EP 4 742 811 A1**

(12) **EUROPEAN PATENT APPLICATION**
published in accordance with Art. 153(4) EPC

(43) Date of publication:
**13.05.2026 Bulletin 2026/20**

(21) Application number: **24836226.1**

(22) Date of filing: **17.06.2024**

(51) International Patent Classification (IPC):
*H04W 74/08* (2024.01)     *H04W 74/0833* (2024.01)
*H04L 69/324* (2022.01)     *H04W 84/12* (2009.01)
*H04W 74/0816* (2024.01)     *H04W 72/50* (2023.01)

(52) Cooperative Patent Classification (CPC):
**H04L 69/324; H04W 72/50; H04W 74/00;**
**H04W 74/08; H04W 74/0816; H04W 74/0833;**
**H04W 84/12**

(86) International application number:
**PCT/KR2024/008295**

(87) International publication number:
**WO 2025/009777 (09.01.2025 Gazette 2025/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **03.07.2023 KR 20230086095**
          **14.07.2023 KR 20230091570**

(71) Applicant: **Electronics and Telecommunications**
**Research Institute**
**Daejeon 34129 (KR)**

(72) Inventors:
- **HWANG, Sung Hyun**
**Daejeon 34129 (KR)**
- **KANG, Kyu Min**
**Daejeon 34129 (KR)**
- **KIM, Yong Ho**
**Incheon 21562 (KR)**
- **MOON, Ju Seong**
**Osan-si Gyeonggi-do 18101 (KR)**

(74) Representative: **Betten & Resch**
**Patent- und Rechtsanwälte PartGmbB**
**Maximiliansplatz 14**
**80333 München (DE)**

(54) **METHOD AND DEVICE FOR CHANNEL ACCESS FOR PREEMPTION TRANSMISSION IN WIRELESS LAN**

(57)     Disclosed are a method and a device for channel access for preemption transmission in a wireless LAN. The method of a first communication node comprises the steps of: receiving a first frame including preemption information from an AP; selecting a counter value on the basis of CW information included in the preemption information; reducing the counter value for each preconfigured unit; and transmitting a first LL frame when the counter value reaches 0.

**(Cont. next page)**

【FIG. 6】

**Description**

[Technical Field]

The present disclosure relates to a wireless local area network (LAN) communication technique, and more particularly, to a channel access technique for preemption operations for low latency (LL) traffic transmission.

[Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.
As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multi-access point (AP) transmission operations, and/or efficient retransmission operations (e.g., hybrid automatic repeat request (HARQ) operations).
The Ultra High Reliability (UHR) wireless LAN technology, IEEE 802.11bn standard, is currently under development. The IEEE 802.11bn standard can support technologies for enhancing reliability and/or low-latency technologies. In a wireless LAN supporting the IEEE 802.11bn standard, technologies for enhancing reliability and/or enabling low-latency communication may be necessary.
Meanwhile, the technologies that are the background of the present disclosure are written to improve the understanding of the background of the present disclosure and may include content that is not already known to those of ordinary skill in the art to which the present disclosure belongs.

[Disclosure]

[Technical Problem]

The present disclosure is directed to providing a channel access method and apparatus for preemption operations for low latency (LL) traffic transmission.

[Technical Solution]

A method of a first communication node, according to exemplary embodiments of the present disclosure for achieving the above-described objective, may comprise: receiving a first frame including preemption information from an access point (AP); selecting a counter value based on contention window (CW) information included in the preemption information; decrementing the counter value at a preconfigured unit; and transmitting a first low latency (LL) frame when the counter value reaches 0.
The selecting of the counter value may comprise: identifying a window [0, preemption contention window (pCW)] based on the CW information; and selecting the counter value within the window [0, pCW], wherein pCW is a CW configured for preemption operations.
The transmitting of the first LL frame may comprise: transmitting the first LL frame after a preset time from an end time of a frame received from the AP, wherein the preset time may be a time required to switch an operation mode of the first communication node from a transmission mode to a reception mode or a time required to switch the operation mode of the first communication node from the reception mode to the transmission mode.
The method may further comprise: in response to LL traffic existing in the first communication node after transmission of the first LL frame, selecting a new counter value based on the CW information; and decrementing the new counter value at the preconfigured unit in order to transmit the LL traffic.
The preconfigured unit may be a frame transmission of the AP or aSlotTime.
The first LL frame may be transmitted in an interval between frame transmissions of the AP.
The first LL frame may be transmitted within an X interframe space (XIFS) from an end time of a frame received from the AP.
A length of the XIFS may be indicated by length information included in the preemption information.
The counter value may be maintained when a second LL frame of a second communication node is transmitted before transmission of the first LL frame, and the counter value may be decremented again at the preconfigured unit after termination of transmission of the second LL frame.

A length of the first LL frame may be less than or equal to a maximum length indicated by maximum length information included in the preemption information.

A method of a first communication node, according to exemplary embodiments of the present disclosure for achieving the above-described objective, may comprise: receiving a first frame including preemption information from an access point (AP); identifying probability information included in the preemption information; determining whether to transmit a first low latency (LL) frame based on the probability information; and in response to determining to transmit the first LL frame, transmitting the first LL frame.

The determining of whether to transmit the first LL frame may comprise: determining a unique probability based on the probability information and unique information of the first communication node; and comparing the unique probability with a threshold indicated by threshold information included in the preemption information, wherein the first LL frame may be determined to be transmitted when the unique probability is greater than or equal to the threshold, and the first LL frame may be determined not to be transmitted when the unique probability is less than the threshold.

The transmitting of the first LL frame may comprise: transmitting the first LL frame after a preset time from an end time of the first frame received from the AP, wherein the preset time may be a time required to switch an operation mode of the first communication node from a transmission mode to a reception mode or a time required to switch the operation mode of the first communication node from the reception mode to the transmission mode.

The first LL frame may be transmitted within an X interframe space (XIFS) from an end time of the first frame received from the AP.

A length of the XIFS may be indicated by length information included in the preemption information.

A length of the first LL frame may be less than or equal to a maximum length indicated by maximum length information included in the preemption information.

A first communication node, according to exemplary embodiments of the present disclosure for achieving the above-described objective, may comprise a processor, wherein the processor causes the first communication node to perform: receiving a first frame including preemption information from an access point (AP); selecting a counter value based on contention window (CW) information included in the preemption information; decrementing the counter value at a preconfigured unit; and transmitting a first low latency (LL) frame when the counter value reaches 0.

In the selecting of the counter value, the processor may cause the first communication node to perform: identifying a window [0, preemption contention window (pCW)] based on the CW information; and selecting the counter value within the window [0, pCW], wherein pCW is a CW configured for preemption operations.

In the transmitting of the first LL frame, the processor may cause the first communication node to perform: transmitting the first LL frame after a preset time from an end time of a frame received from the AP, wherein the preset time may be a time required to switch an operation mode of the first communication node from a transmission mode to a reception mode or a time required to switch the operation mode of the first communication node from the reception mode to the transmission mode.

The first LL frame may be transmitted within an X interframe space (XIFS) from an end time of a frame received from the AP.

[Advantageous Effects]

According to the present disclosure, an access point (AP) can divide a single data frame into multiple data frames and transmit these multiple data frames. An interframe space for preemption operations may be controlled by the AP. Within the interframe space for preemption operations, the data frames from the AP may not be targets of reception. Within the interframe space for preemption operations, a station (STA) can transmit a low latency (LL) frame (e.g., LL traffic). To transmit the LL frame, a channel access method (e.g., enhanced distributed channel access (EDCA) or separate channel access method) may be used.

For example, within the interframe space for preemption operations, a separate backoff procedure can be performed for transmission of the LL frame. The AP can indicate to the STA parameters for the backoff procedure (e.g., backoff procedure parameters for LL frame transmission). Alternatively, the parameters for the backoff procedure can be preconfigured at the AP and/or STA, and the AP and/or STA can use the preconfigured value(s) (e.g., preconfigured parameter(s)) for the backoff procedure. If the backoff procedure is successful, the STA can transmit the LL frame. Based on the channel access method for preemption operations, frame collisions (e.g., transmission collisions) between multiple STAs in the LL frame transmission procedures can be prevented, enabling smooth transmission of the LL frame.

[Description of Drawings]

FIG. 1 is a conceptual diagram illustrating a first exemplary embodiment of a wireless LAN system.

FIG. 2 is a block diagram illustrating a first exemplary embodiment of a communication node constituting a wireless LAN system.

FIG. 3 is a conceptual diagram illustrating a first exemplary embodiment of a multi-link configured between multi-link devices (MLDs).

FIG. 4 is a sequence chart illustrating a first exemplary embodiment of a negotiation procedure for a multi-link operation in a wireless LAN system.

FIG. 5 is a block diagram illustrating exemplary embodiments of a structure of a MAC header for a preemption operation in a wireless LAN.

FIG. 6 is a timing diagram illustrating exemplary embodiments of a channel access method in preemption operation.

FIG. 7 is a timing diagram illustrating exemplary embodiments of a channel access method in preemption operation.

FIG. 8 is a timing diagram illustrating exemplary embodiments of a channel access methods in preemption operation.

FIG. 9 is a timing diagram illustrating exemplary embodiments of a channel access method in preemption operation.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'. The names of frames proposed in the present disclosure may be generalized such as first frame, second frame, third frame, and the like. In the present disclosure, a transmission time may mean a start time of frame transmission and/or an end time of frame transmission, and a reception time (e.g., completion time) may mean a start time of frame reception and/or an end time (e.g., completion time) of frame reception. Time may be interpreted as a time point depending on a context.

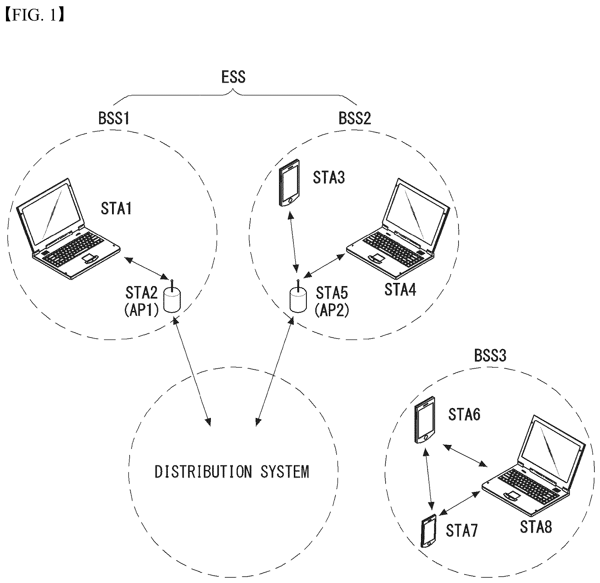

FIG. 1 is a conceptual diagram illustrating a first exemplary embodiment of a wireless LAN system.

Referring to FIG. 1, a wireless LAN system may include at least one basic service set (BSS). A BSS may refer to a set of stations (e.g., STA1, STA2 (AP1), STA3, STA4, STA5 (AP2), STA6, STA7, and STA8) that can communicate with each other through successful synchronization, and may not refer to a specific region. In exemplary embodiments below, a station performing functions as an access point may be referred to as an 'access point (AP)', and a station not performing functions as an access point may be referred to as a 'non-AP station' or a 'station'.

The BSS may be classified into an infrastructure BSS and an independent BSS (IBSS). Here, a BSS1 and a BSS2 may mean infrastructure BSSs, and a BSS3 may mean an IBSS. The BSS1 may include a first station (STA1), a first access point (STA2 (AP1)) providing a distribution service, and a distribution system (DS) connecting a plurality of access points (STA2 (AP1) and STA5 (AP2)). In the BSS1, the first access point STA2 (AP1) may manage the first station STA1.

The BSS2 may include a third station (STA3), a fourth station (STA4), a second access point (STA5 (AP2)) providing a distribution service, and a DS connecting the plurality of access points (STA2 (AP1) and STA5 (AP2)). In the BSS2, the second access point STA5 (AP2) may manage the third station STA3 and the fourth station STA4.

The BSS3 may mean an IBSS operating in an ad-hoc mode. An access point, which is a centralized management entity, may not exist in the BSS3. That is, in the BSS3, the stations STA6, STA7, and STA8 may be managed in a distributed manner. In the BSS3, all stations STA6, STA7, and STA8 may refer to mobile stations, and since they are not allowed to access a DS, they may constitute a self-contained network.

The access points STA2 (AP1) and STA5 (AP2) may provide access to the DS for the stations STA1, STA3, and STA4 associated therewith via a wireless medium. In the BSS1 or BSS2, communications between the stations STA1, STA3, and STA4 are generally performed through the access points STA2 (AP1) and STA5 (AP2), but when direct links are established, direct communications between the stations STA1, STA3, and STA4 may be possible.

A plurality of infrastructure BSSs may be interconnected through a DS. The plurality of BSSs connected through the DS may be referred to as an extended service set (ESS). The communication nodes STA1, STA2 (AP1), STA3, STA4, and STA5 (AP2) included in the ESS may communicate with each other, and an arbitrary station (STA1, STA3, or STA4) may move from one BSS to another BSS within the same ESS while communicating without interruption.

The DS may be a mechanism for one access point to communicate with another access point, according to which an access point may transmit frames for stations associated with the BSS it manages, or transmit frames for an arbitrary station that has moved to another BSS. Also, the access point may transmit and receive frames to and from an external network such as a wired network. Such the DS may not necessarily have to be a network, and if it can provide a predetermined distribution service stipulated in the IEEE 802.11 standard, there is no restriction on its form. For example, the DS may be a wireless network such as a mesh network or a physical structure that connects the access points to each other. The communication nodes STA1, STA2 (AP1), STA3, STA4, STA5 (AP2), STA6, STA7, and STA8 included in the wireless LAN system may be configured as follows.

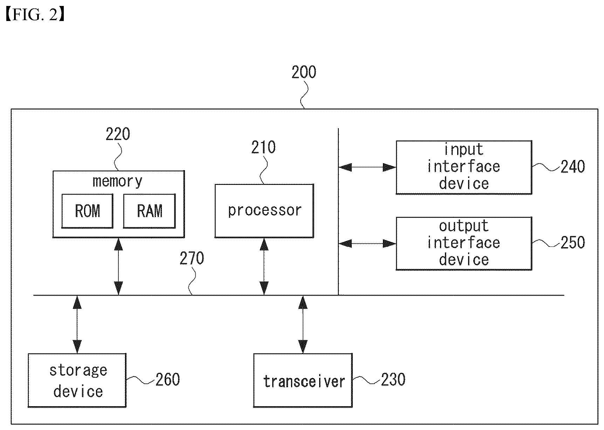

FIG. 2 is a block diagram illustrating a first exemplary embodiment of a communication node constituting a wireless LAN system.

Referring to FIG. 2, a communication node 200 may be an AP, STA, AP MLD, STA MLD, EMLSR AP MLD, or EMLSR STA MLD. The STA may be a non-AP STA. An operating channel width supported by the AP may be 20 megahertz (MHz), 80 MHz, 160 MHz, or the like. An operating channel width supported by the STA may be 20 MHz, 80 MHz, or the like. In the present disclosure, an AP may be interpreted as an AP MLD or EMLSR AP MLD depending on a context, a STA may be interpreted as a STA MLD or EMLSR STA MLD depending on a context, and a MLD may be interpreted as an AP MLD, STA MLD, or EMLSR AP MLD, or EMLSR STA MLD depending on a context. The EMLSR operation may include a MLSR operation. An EMLSR may be interpreted as a MLSR depending on a context, and a MLSR may be interpreted as an EMLSR depending on a context. Operations of an AP MLD may be interpreted as operations of an AP affiliated with the AP MLD, and operations of an AP may be interpreted as operations of an AP MLD affiliated with the AP. Operations of a STA MLD may be interpreted as operations of a STA affiliated with the STA MLD, and operations of a STA may be interpreted as operations of a STA MLD affiliated with the STA.

The communication node 200 may include at least one processor 210, a memory 220, and a transceiver 230 connected to a network to perform communications. The transceiver 230 may be referred to as a transceiver, a radio frequency (RF) unit, an RF module, or the like. In addition, the communication node 200 may further include an input interface device 240, an output interface device 250, a storage device 260, and the like. The respective components included in the communication node 200 may be connected by a bus 270 to communicate with each other.

However, the respective components included in the communication node 200 may be connected through individual interfaces or individual buses centering on the processor 210 instead of the common bus 270. For example, the processor 210 may be connected to at least one of the memory 220, the transceiver 230, the input interface device 240, the output interface device 250, and the storage device 260 through a dedicated interface.

The processor 210 may execute program commands stored in at least one of the memory 220 and the storage device 260. The processor 210 may refer to a central processing unit (CPU), a graphics processing unit (GPU), or a dedicated processor on which the methods according to the exemplary embodiments of the present invention are performed. Each of the memory 220 and the storage device 260 may be configured as at least one of a volatile storage medium and a nonvolatile storage medium. For example, the memory 220 may be configured with at least one of a read only memory (ROM) and a random access memory (RAM).

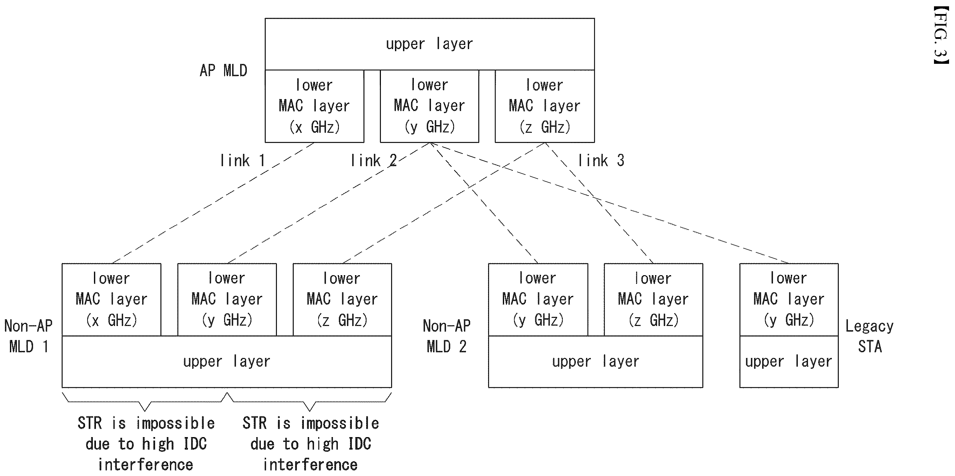

FIG. 3 is a conceptual diagram illustrating a first exemplary embodiment of a multi-link configured between multi-link devices (MLDs).

Referring to FIG. 3, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD). The AP of the AP MLD may mean an AP affiliated with the AP MLD. The STA of the STA MLD may mean a STA affiliated with the STA MLD.

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 210 shown in FIG. 2). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 210 shown in FIG. 2).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

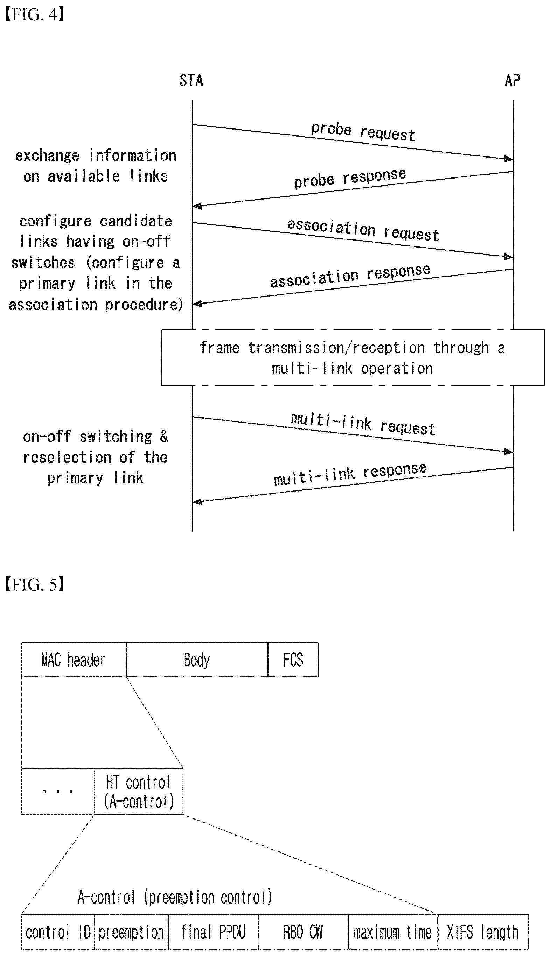

FIG. 4 is a sequence chart illustrating a first exemplary embodiment of a negotiation procedure for a multi-link operation in a wireless LAN system.

Referring to FIG. 4, an access procedure between a STA and an AP in an infrastructure basic service set (BSS) may generally be divided into a probe step of probing AP(s), an authentication step for authentication between the STA and the probed AP, and an association step of association between the STA and the authenticated AP.

In the probe step, the STA may detect one or more APs using a passive scanning scheme or an active scanning scheme. When the passive scanning scheme is used, the STA may detect one or more APs by overhearing beacons transmitted by the one or more APs. When the active scanning scheme is used, the STA may transmit a probe request frame, and may detect one or more APs by receiving probe response frames that are responses to the probe request frame from the one or more APs.

When the one or more APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In particular, the STA may select one AP among AP(s) with which the STA has performed the authentication step, and perform the association step with the selected AP. That is, the STA may transmit an association request frame to the selected AP, and may complete the association with the AP by receiving an association response frame that is a response to the association request frame from the selected AP.

Meanwhile, a multi-link operation may be supported in the wireless LAN system. A multi-link device (MLD) may include one or more STAs affiliated with the MLD. The MLD may be a logical entity. The MLD may be classified into an AP MLD and a non-AP MLD. Each STA affiliated with the AP MLD may be an AP, and each STA affiliated with the non-AP MLD may be a non-AP STA. In order to configure a multi-link, a multi-link discovery procedure, a multi-link setup procedure, and the like may be performed. The multi-link discovery procedure may be performed in the probe step between a STA and an AP. In this case, multi-link information elements (ML IEs) may be included in the beacon frame, the probe request frame, and/or the probe response frame.

For example, in order to perform a multi-link operation, in the probe step, the AP (e.g., AP affiliated with an MLD) may exchange information indicating whether the multi-link operation can be used and information on available link(s) with the STA (e.g., non-AP STA affiliated with an MLD). In a negotiation procedure for the multi-link operation (e.g., multi-link setup procedure), the STA may transmit information of link(s) to be used for the multi-link operation. The negotiation procedure for the multi-link operation may be performed in the access procedure (e.g., association step) between the STA and the AP, and information element(s) required for the multi-link operation may be configured or changed by an action frame in the negotiation procedure.

In addition, in the access procedure (e.g., association step) between the STA and the AP, available link(s) of the AP may be configured, and an identifier (ID) may be assigned to each link. Thereafter, in the negotiation procedure and/or change procedure for the multi-link operation, information indicating whether each link is activated may be transmitted, and the information may be expressed using the link ID(s).

The information indicating whether the multi-link operation can be used may be transmitted and received in a procedure of exchanging capability information element(s) (e.g., EHT capability information element(s)) between the STA and the AP. The capability information element(s) may include information of supporting band(s), information of supporting link(s) (e.g., ID(s) and/or number of supporting link(s)), information of links capable of simultaneous transmission and reception (STR) operations (e.g., information on bands of the links, information on a separation between the links), and/or the like. In addition, the capability information element(s) may include information that individually indicates a link capable of the STR operation.

Exemplary embodiments of the present disclosure may be applied to a single link as well as to multiple links. In other words, exemplary embodiments described as being applied to multiple links may be applied to a single link in the same and/or similar manner. Exemplary embodiments described as being applied to a single link may be applied to multiple links in the same and/or similar manner. A preemption method will be proposed in the present disclosure. The preemption method (e.g., preemption operation) may refer to a priority transmission method (e.g., priority transmission operation). The preemption method may be applied to multiple links and/or a single link. The preemption method may be used for transmission of low latency (LL) traffic. The LL traffic may refer to latency sensitive (LS) traffic. The LL traffic may be referred to as LL data or LL frame. The LS traffic may be referred to as LS data or LS frame. The preemption method may be used for transmission of periodic LL traffic and/or aperiodic LL traffic. Alternatively, the preemption method may be used for transmission of traffic other than LL traffic (e.g., LS traffic).

FIG. 5 is a block diagram illustrating exemplary embodiments of a structure of a MAC header for a preemption operation in a wireless LAN.

Referring to FIG. 5, a frame transmitted by an AP and/or an STA may include a MAC header. The frame may be a physical layer protocol data unit (PPDU), a medium access control layer protocol data unit (MPDU), an aggregated MPDU (A-MPDU), or the like. The frame may be a control frame, a management frame, and/or a data frame. The MAC header may include one or more high throughput (HT) control fields. The HT control field may have an A-control variant form. The HT control field may include control information in an A-control form. Information element(s) for a preemption operation may be included in the HT control field. For example, information element(s) for indicating the preemption operation may be included in the HT control field in an A-control form.

The HT control field may include at least one of a control identifier (ID) field or preemption information (e.g., preemption control information, preemption configuration information). The preemption information may include at least one of a preemption field, a final PPDU field, a random back-off (RBO) contention window (CW) field, a maximum time field, or an X interframe space (XIFS) length field. The control ID field may be a field for distinguishing control information included in the HT control field. The control ID field may indicate preemption control. In other words, the control ID field may indicate that the control information included in the HT control field is preemption control information. When the control ID field indicates preemption control (e.g., preemption operation), the HT control field associated with the control ID field may include information element(s) for the preemption operation.

The preemption field may include information indicating whether the preemption operation (e.g., priority transmission operation) is allowed. For example, the preemption field may include information indicating whether the preemption operation is allowed after the frame transmitted by a communication node (e.g., AP and/or STA). The preemption field may include information indicating whether an uplink (UL) preemption operation is allowed and/or information indicating whether a downlink (DL) preemption operation is allowed. If the UL preemption operation is allowed, the STA may transmit LL traffic to the AP. In other words, the STA may transmit the LL traffic to the AP by performing the UL preemption operation. If the DL preemption operation is allowed, the AP may transmit LL traffic to the STA. In other words, the AP may transmit the LL traffic to the STA by performing the DL preemption operation.

The preemption field may include information indicating which interframe space (IFS) is used after the frame transmitted by the AP. The size of the preemption field may be 1 bit. A first value (e.g., 0) of the preemption field may indicate that the preemption operation is not allowed (e.g., preemption operation is not allowed after the frame transmission by the communication node). A second value (e.g., 1) of the preemption field may indicate that the preemption operation is allowed (e.g., preemption operation is allowed after the frame transmission by the communication node).

If the preemption operation is allowed, an X interframe space (XIFS) may be used instead of a short interframe space (SIFS). For example, since the XIFS is an IFS used in the preemption operation, it may be referred to as a preemption (Pr) IFS, or the like. In other words, the XIFS may be used for the preemption operation. The XIFS may be referred to as an LL IFS or Pr IFS. The XIFS may be set independently of other IFSs (e.g., SIFS). The length of XIFS may be longer than the length of SIFS. For example, the length of XIFS may be equal to a priority interframe space (PIFS), arbitrary interframe space (AIFS), distributed coordination function interframe space (DIFS), or the like, which is longer than the SIFS. Alternatively, the length of XIFS may be less than or equal to the length of SIFS. The final PPDU field may include information indicating whether a PPDU (e.g., frame) including the final PPDU field is a final PPDU (e.g., the last frame). The final PPDU field may be referred to as a final frame field. In a block acknowledgment (BA) scheme, transmission of a BA frame may be needed after transmission of a final PPDU, and transmission of a BA frame may not be needed after transmission of a PPDU other than a final PPDU. Therefore, the final PPDU field may be interpreted as information indicating whether transmission of a response frame is requested for the frame (e.g., the final frame) transmitted by the AP. In the present disclosure, the response frame may be an acknowledgement (ACK) frame or a BA frame.

The size of the final PPDU field may be 1 bit. A first value (e.g., 0) of the final PPDU field may indicate that a PPDU including the final PPDU field is not a final PPDU. If the current PPDU is not a final PPDU, transmission of a response frame for the current PPDU may not be needed. In other words, the first value (e.g., 0) of the final PPDU field may indicate that transmission of a response frame for the frame is not required. If the final PPDU field is set to the first value, the STA may not transmit a response frame after an SIFS or XIFS from a reception time of the frame.

If the PPDU including the final PPDU field is an LL PPDU, the interpretation of the value of the final PPDU field may be different. The LL PPDU may include LL traffic. Transmission of the LL PPDU may be performed between PPDU transmissions that are not LL PPDU transmissions. In the above-described situation, the final PPDU field of the LL PPDU may be set to the first value (e.g., 0). In other words, since transmission of the LL PPDU is not transmission of the final PPDU among PPDU transmissions, the final PPDU field of the LL PPDU may be set to the first value (e.g., 0). When the final PPDU field of the LL PPDU is set to the first value (e.g., 0), a response frame for the LL PPDU may be transmitted after an IFS (e.g., SIFS or XIFS) from a transmission end time of the LL PPDU.

A second value (e.g., 1) of the final PPDU field may indicate that the PPDU including the final PPDU field is a final PPDU. If the current PPDU is a final PPDU, transmission of a response frame for the current PPDU may be required. In other words, the second value (e.g., 1) of the final PPDU field may indicate that transmission of a response frame for the frame (e.g., the final frame) is required. If the final PPDU field is set to the second value, the STA may transmit a response frame to the AP after an SIFS or XIFS from a reception time of the frame (e.g., the final frame).

The RBO CW field may include parameters (e.g., information) for collision avoidance in the preemption operation. The RBO CW field may indicate a contention window (CW) size (e.g., preemption contention window (pCW)) for a channel access window (e.g., [0, pCW]). The pCW may be a channel access parameter for the preemption operation. The pCW may be set independently of a CW for normal operations (e.g., communication that does not support the preemption operation, normal communication that uses EDCA rather than preemption). For example, the pCW for the preemption operation may be set differently from the CW for the normal operation. The maximum time field may include information indicating a maximum time (e.g., the length of the maximum time) during which transmission can be performed in the preemption operation. The communication node (e.g., STA and/or AP) performing the preemption operation may not be able to perform frame transmission (e.g., transmission of LL traffic) exceeding the maximum time indicated by the maximum time field. The maximum time field may be interpreted in the same or similar manner as the interpretation of a duration/ID field included in the MAC header. Based on the interpretation method, the length of the frame indicated by the maximum time field may be determined. Alternatively, the maximum time field may be indicated in time units (TUs).

The XIFS length field may indicate the length of XIFS. The XIFS length field may be interpreted in the same or similar manner as the interpretation of a duration/ID field included in the MAC header. Based on the interpretation method, the length of XIFS indicated by the XIFS length field may be determined.

Alternatively, the length of XIFS may be aSIFSTime + N x aSlotTime. N may be indicated by the XIFS length field. N may be an integer greater than or equal to 0. aSlotTime may be 4.5 $\mu$s, 9 $\mu$s, or the like. If preemption information is included in a frame, the XIFS may be used for transmission of the frame. For example, the XIFS may be used for transmission of the frame including the preemption information. If preemption information is not included in a frame, an IFS (e.g., SIFS) other than XIFS may be used for transmission of the frame. For example, the SIFS may be used for transmission of the frame not including preemption information.

The information (e.g., fields) illustrated in FIG. 5 may be adapted into various forms. The adapted information may be included in a frame having various formats, and the frame may be transmitted. For example, the A-control field illustrated in FIG. 5 may be adapted, and the variant A-control field may be included in a frame having various formats in the form of information elements, indication bits, or subfields, and the frame may be transmitted.

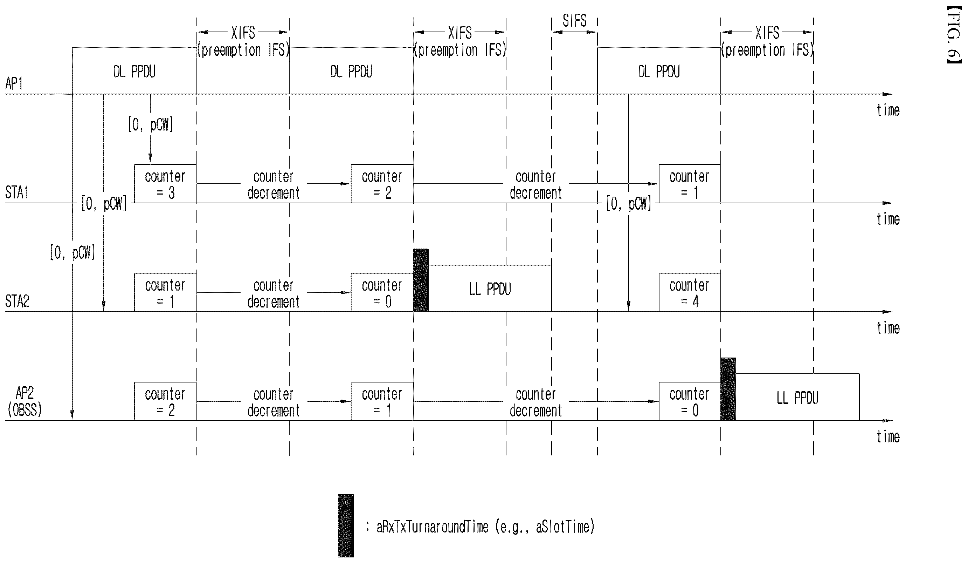

FIG. 6 is a timing diagram illustrating exemplary embodiments of a channel access method in preemption operation.

Referring to FIG. 6, an AP1, AP2, STA1, and/or STA2 may operate in a wireless LAN. The AP1, AP2, STA1, and/or STA2 may support preemption operations. In other words, preemption operations may be enabled in the wireless LAN. The AP1 may control (e.g., limit) preemption operations of other AP(s) and/or other STA(s). The STA1 and/or STA2 may be associated with the AP1. The AP1 and AP2 may operate in the same frequency (e.g., frequency band). The AP2 may be located in an overlapping basic service set (OBSS). In other words, the AP2 may be an OBSS AP2. The AP1 may perform a channel access procedure. In other words, the AP1 may contend for access to a medium. The channel access procedure may be an EDCA backoff procedure (e.g., random backoff procedure). If the channel access procedure (e.g., EDCA backoff procedure) is successful, the AP1 may obtain a TXOP capable of transmitting multiple frames, and may transmit DL PPDU(s) (e.g., PPDU(s), data frame(s)) within the TXOP. The DL PPDUs may be transmitted with an interval of XIFS for the preemption operation. The DL PPDUs may be transmitted sequentially. In other words, frame transmissions of the AP1 may be performed sequentially with the interval of XIFS.

The DL PPDU (e.g., MAC header of the PPDU) transmitted by the AP1 may include the preemption information as illustrated in FIG. 5. The preemption information may include pCW information and/or XIFS length information. The STA1, STA2, and/or AP2 may be communication nodes that wish to perform preemption operations. In other words, the STA1, STA2, and/or AP2 may have LL traffic to be transmitted. The STA1, STA2, and/or AP2 may receive the DL PPDU from the AP1, and may identify the preemption information (e.g., pCW information and/or XIFS length information) included in the DL PPDU. The STA1, STA2, and/or AP2 may select an integer within a window [0, pCW] based on a uniform probability distribution (e.g., uniform random distribution). Since the pCW information is indicated by the PPDU transmitted by the AP1, the STA1, STA2, and/or AP2 may identify the window [0, pCW] based on the pCW information. The selected integer (e.g., backoff value) may be referred to as a preemption channel access counter. The preemption channel access counter may be simply referred to as a counter. The counter may refer to a counter value.

The STA1 may select 3 within the window [0, pCW], and a counter of the STA1 may be set to 3. The STA2 may select 1 within the window [0, pCW], and a counter of the STA2 may be set to 1. The AP2 may select 2 within the window [0, pCW], and a counter of the AP2 may be set to 2. Each of the STA1, STA2, and/or AP2 may decrement the counter by 1 at a preconfigured unit. For example, each of the STA1, STA2, and/or AP2 may decrement the counter by 1 after reception of a DL PPDU of the AP1 is terminated. The preconfigured unit may be a frame transmission (e.g., reception of a DL PPDU) of the AP1. The preconfigured unit may be referred to as a counting unit. When the counter reaches 0, the communication node having the counter 0 may initiate transmission (e.g., frame transmission) within an XIFS from a reception end time of the DL PPDU of the AP1. The length of XIFS may be indicated by the DL PPDU of the AP1 (e.g., the XIFS length field included in the preemption information).

For example, the counter of the STA2 may reach 0. In this case, the STA2 may transmit an LL PPDU (e.g., LL frame, uplink frame) to the AP1 after at least aRxTxTurnaroundTime (e.g., at least aSlotTime) after the reception end time of the DL PPDU of the AP1. aRxTxTurnaroundTime may be a time required to switch a radio of the communication node (e.g., AP, STA) from a transmission mode to a reception mode or a time required to switch the radio of the communication node (e.g., AP, STA) from the reception mode to the transmission mode. In other words, aRxTxTurnaroundTime may be a time required for switching the operation mode of the communication node (e.g., 'transmission mode → reception mode' or 'reception mode → transmission mode'). As another method, when the counter of the STA2 reaches 0, the STA2 may transmit an LL PPDU to the AP1 immediately after the reception end time (e.g., end time point) of the DL PPDU received from the AP1. In other words, the STA2 may transmit the LL PPDU to the AP1 without waiting as long as aRxTxTurnaroundTime from the reception end time of the DL PPDU received from the AP1. As another method, when the counter of the STA 2 reaches 0, the STA 2 may transmit an LL PPDU to the AP1 after an SIFS from the reception end time (e.g., end time point) of the DL PPDU received from the AP1. In this case, the XIFS may be longer than the SIFS.

After the transmission of the LL PPDU is completed, the STA 2 may reselect a counter within the window [0, pCW]. The reselection operation of the counter may be performed when the preemption operation is required. If the preemption operation is not required (e.g., if there is no LL traffic), the STA2 may not perform the reselection operation of the counter. If the STA2 does not perform the reselection operation of the counter, the STA2 may no longer transmit frames using the preemption operation within the TXOP of the AP1.

The AP1 may receive the LL PPDU from the STA2. After reception of the LL PPDU of the STA2 is completed, the AP1 may transmit a DL PPDU, and the counter of the AP2 may reach 0 after a reception end time of the DL PPDU. In this case, the AP2 may transmit an LL PPDU (e.g., LL frame) to the AP1 or STA(s) associated with (e.g., connected to) the AP2 after at least aRxTxTurnaroundTime (e.g., at least aSlotTime) from the reception end time (e.g., end time point) of the DL PPDU received from the AP1. Alternatively, the AP2 may transmit the LL PPDU (e.g., LL frame) to the AP1 of STA(s) associated with (e.g., connected to) the AP2 immediately after the reception end time of the DL PPDU received from the AP1.

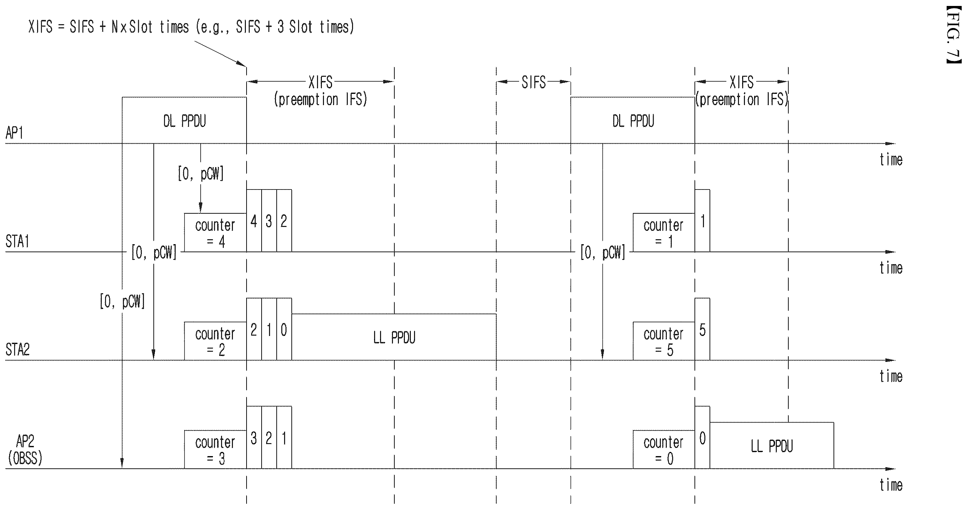

FIG. 7 is a timing diagram illustrating exemplary embodiments of a channel access method in preemption operation.

Referring to FIG. 7, an AP1, AP2, STA1, and/or STA2 may operate in a wireless LAN. The AP1, AP2, STA1, and/or STA2 may support preemption operations. In other words, preemption operations may be enabled in the wireless LAN. The AP1 may control (e.g., limit) preemption operations of other AP(s) and/or other STA(s). The STA1 and/or STA2 may be associated with the AP1. The AP1 and AP2 may operate in the same frequency (e.g., frequency band). The AP2 may be located in an overlapping basic service set (OBSS). In other words, the AP2 may be an OBSS AP2. The AP1 may perform a channel access procedure. In other words, the AP1 may contend for access to a medium. The channel access procedure may be an EDCA backoff procedure (e.g., random backoff procedure). If the channel access procedure (e.g., EDCA backoff procedure) is successful, the AP1 may obtain a TXOP capable of transmitting multiple frames, and may transmit DL PPDU(s) (e.g., PPDU(s), data frame(s)) within the TXOP. The DL PPDUs may be transmitted with an interval of XIFS for the preemption operation. The DL PPDUs may be transmitted sequentially. In other words, frame transmissions of the AP1 may be performed sequentially with the interval of XIFS.

The DL PPDU (e.g., MAC header of the PPDU) transmitted by the AP1 may include the preemption information as illustrated in FIG. 5. The preemption information may include pCW information and/or XIFS length information. The STA1, STA2, and/or AP2 may be communication nodes that wish to perform preemption operations. In other words, the STA1, STA2, and/or AP2 may have LL traffic to be transmitted. The STA1, STA2, and/or AP2 may receive the DL PPDU from the AP1, and may identify the preemption information (e.g., pCW information and/or XIFS length information) included in the DL PPDU. The STA1, STA2, and/or AP2 may select an integer within a window [0, pCW] based on a uniform probability distribution (e.g., uniform random distribution). Since the pCW information is indicated by the PPDU transmitted by the AP1, the STA1, STA2, and/or AP2 may identify the window [0, pCW] based on the pCW information. The selected integer (e.g., backoff value) may be referred to as a preemption channel access counter. The preemption channel access counter may be simply referred to as a counter. The counter may refer to a counter value.

The STA1 may select 4 within the window [0, pCW] and the counter of the STA1 may be set to 4. The STA2 may select 2 within the window [0, pCW], and the counter of the STA2 may be set to 2. The AP2 may select 3 within the window [0, pCW], and the counter of the AP2 may be set to 3. The length of XIFS may be aSIFSTime + N x aSlotTime. In other words, the length of XIFS may be SIFS + N slot times. N may be an integer greater than or equal to 0. For example, N may be 3. N may be indicated by an XIFS length field included in the DL PPDU transmitted by the AP1. The XIFS length field may be included in preemption information present in a MAC header of an MPDU included in the DL PPDU.

Each of the STA1, STA2, and/or AP2 may decrement the counter by 1 at a preconfigured unit. For example, each of the STA1, STA2, and/or AP2 may decrement the counter by 1 every aSlotTime. The preconfigured unit (e.g., counting unit) may be aSlotTime. The counter may be decremented after a reception end time of a DL PPDU of the AP1. The STA1 may decrement the counter in the order of 4 → 3 → 2 → 1 → 0. The STA2 may decrement the counter in the order of 2 → 1 → 0. The AP2 may decrement the counter in the order of 3 → 2 → 1 → 0. Among the STA1, STA2, and AP2, the counter of the STA2 may reach 0 first. In addition, when the counter of the STA2 reaches 0, the XIFS may not yet be terminated. In this case, the STA2 may transmit an LL frame within the XIFS. The STA2's LL frame may be transmitted within the XIFS from a reception end time (e.g., end time point) of the DL PPDU received from the AP1. After the transmission of the LL frame is completed, the STA2 may reselect a counter within the window [0, pCW]. The reselection operation of the counter may be performed when the preemption operation is required. If the preemption operation is not required (e.g., if there is no LL traffic), the STA2 may not perform the reselection operation of the counter. If the STA2 does not perform the reselection operation of the counter, the STA2 may no longer transmit frames using the preemption operation within the TXOP of the AP1.

When the STA2 transmits an LL frame, the STA1 and AP2 may detect that the medium is in a busy state, and may not decrement the counters in the busy state. In other words, the counters of the STA1 and AP2 may be maintained (e.g., frozen). For example, the counter of STA1 may be maintained as 2 or 1, and the counter of AP2 may be maintained as 1 or 0. The AP1 may receive the LL PPDU from the STA2, and transmit a DL PPDU after receiving the LL PPDU. The DL PPDU of the AP1 may be transmitted within an SIFS from an end time of the LL PPDU received from the STA2. The STA1, STA2, and/or AP2 may receive the DL PPDU from the AP1.

After a reception end time of the DL PPDU of the AP1, each of the STA1, STA2, and AP2 may decrement the counter. The STA2 may select a new counter within the window [0, pCW]. If the new counter of the STA2 is 5, the STA2 may decrement its counter in the order of $5 \rightarrow 4 \rightarrow 3 \rightarrow 2 \rightarrow 1 \rightarrow 0$. If the counter of the STA1 (e.g., the previous counter) is 2, the STA1 may decrement the counter in the order of $2 \rightarrow 1 \rightarrow 0$. If the counter of the AP2 (e.g., the previous counter) is 1, the AP2 may decrement the counter in the order of $1 \rightarrow 0$. Alternatively, if the counter of the STA1 (e.g., the previous counter) is 1, the STA1 may decrement the counter in the order of $1 \rightarrow 0$. When the counter of the AP2 (e.g., the previous counter) is 0, the counter of the AP2 may reach 0 after the reception end time of the DL PPDU of the AP1.

Among the STA1, STA2, and AP2, the counter of the AP2 may reach 0 first. In addition, when the counter of the AP2 reaches 0, the XIFS may not be terminated yet. In this case, the AP2 may transmit an LL PPDU (e.g., LL frame) to the AP 1 or STA(s) associated with (e.g., connected to) the AP2 within the XIFS from the end time of the DL PPDU received from the AP1.

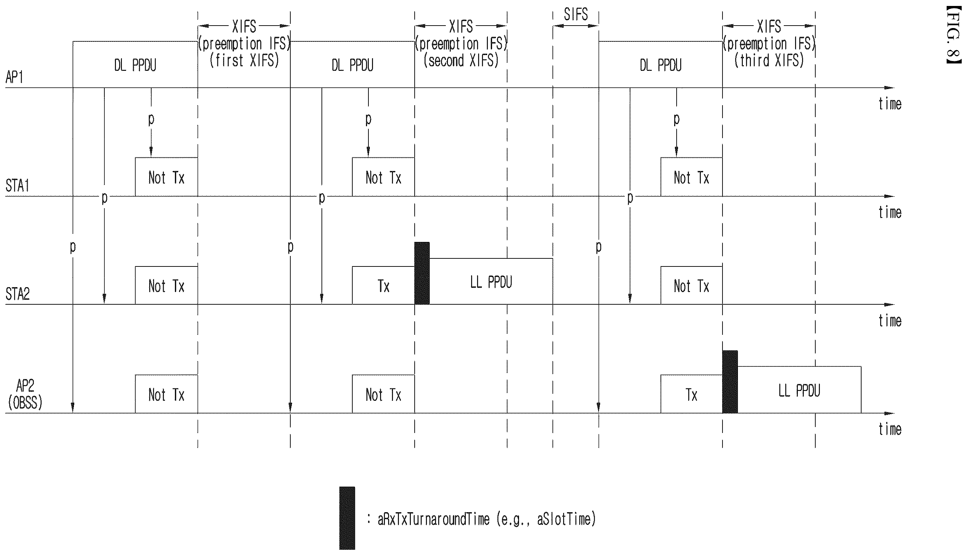

FIG. 8 is a timing diagram illustrating exemplary embodiments of a channel access methods in preemption operation.

Referring to FIG. 8, an AP1, AP2, STA1, and/or STA2 may operate in a wireless LAN. The AP1, AP2, STA1, and/or STA2 may support preemption operations. In other words, preemption operations may be enabled in the wireless LAN. The AP1 may control (e.g., limit) preemption operations of other AP(s) and/or other STA(s). The STA1 and/or STA2 may be associated with the AP1. The AP1 and AP2 may operate in the same frequency (e.g., frequency band). The AP2 may be located in an overlapping basic service set (OBSS). In other words, the AP2 may be an OBSS AP2. The AP1 may perform a channel access procedure. In other words, the AP1 may contend for access to a medium. The channel access procedure may be an EDCA backoff procedure (e.g., random backoff procedure). If the channel access procedure (e.g., EDCA backoff procedure) is successful, the AP1 may obtain a TXOP capable of transmitting multiple frames, and may transmit DL PPDU(s) (e.g., PPDU(s), data frame(s)) within the TXOP. The DL PPDUs may be transmitted with an interval of XIFS for the preemption operation. The DL PPDUs may be transmitted sequentially. In other words, frame transmissions of the AP1 may be performed sequentially with the interval of XIFS.

The DL PPDU (e.g., MAC header of the PPDU) transmitted by the AP1 may include the preemption information as illustrated in FIG. 5. The preemption information may include at least one of pCW information, XIFS length information, probability information (e.g., probability (p) information), or threshold information. The probability information may indicate a probability that a communication node transmits a frame. Alternatively, the probability information may be used to determine a probability (e.g., unique probability) that a communication node transmits a frame.

The STA1, STA2, and/or AP2 may be communication nodes that wish to perform preemption operations. In other words, the STA1, STA2, and/or AP2 may have LL traffic to be transmitted. The STA1, STA2, and/or AP2 may receive a DL PPDU from the AP1 and may identify preemption information (e.g., pCW information, XIFS length information, probability information, and/or threshold information) included in the DL PPDU. Each of the STA1, STA2, and/or AP2 may determine whether to transmit a frame (e.g., LL frame, LL PPDU) within an XIFS (e.g., interval between frame transmissions of the AP1) based on a probability according to the probability information (e.g., p information), and transmit the frame based on the determination.

Each of the STA1, STA2, and AP2 may determine a unique probability based on the probability information received from the AP1 and unique information of each communication node (e.g., association identifier (AID), MAC address, identification information, counter (e.g., backoff value) selected by each communication node). For example, each of the STA1, STA2, and AP2 may determine the unique probability based on Equation 1 below. Each of the STA1, STA2, and AP2 may select a counter within the window [0, pCW], and determine a unique probability based on the selected counter and the probability information indicated by the AP1.

[Equation 1]

$$unique\ probability = probabilty\ (p)\ information \times \frac{1}{selected\ counter}$$

The unique probability of the STA1, the unique probability of the STA2, and the unique probability of the AP2 may be different from each other. Each of the STA1, STA2, and AP2 may compare it unique probability with a threshold indicated by the AP1. If the unique probability of the STA2 is greater than or equal to the threshold, and the unique probabilities of the STA1 and AP2 are less than the threshold, the STA2 may transmit an LL frame, and the STA1 and AP2 may not transmit an LL frame. If the unique probability of the AP2 is greater than or equal to the threshold, and the unique probabilities of the STA1 and STA2 are less than the threshold, the AP2 may transmit an LL frame, and the STA1 and STA2 may not transmit an LL frame.

Alternatively, each of the STA1, STA2, and AP2 may determine the unique probability based on Equation 2 below. Each of the STA1, STA2, and AP2 may select a counter within the window [0, pCW], and determine the unique probability based on the selected counter and the probability information indicated by the AP1.

[Equation 2]

$$unique\ probability = probabilty\ (p)\ information\ \times selected\ counter$$

The unique probability of the STA1, the unique probability of the STA2, and the unique probability of the AP2 may be different from each other. Each of the STA1, STA2, and AP2 may compare it unique probability with a threshold indicated by the AP1. If the unique probability of the STA2 is less than the threshold, and the unique probabilities of the STA1 and AP2 are equal to or greater than the threshold, the STA2 may transmit an LL frame, and the STA1 and AP2 may not transmit an LL frame. If the unique probability of the AP2 is less than the threshold, and the unique probabilities of the STA1 and STA2 are equal to or greater than the threshold, the AP2 may transmit an LL frame, and the STA1 and STA2 may not transmit an LL frame.

As another method, the STA1, STA2, and/or AP2 may select an integer within the window [0, pCW] based on a uniform probability distribution (e.g., uniform random distribution). Since pCW information is indicated by the PPDU transmitted by the AP1, the STA1, STA2, and/or AP2 may identify the window [0, pCW] based on the pCW information. The selected integer (e.g., backoff value) may be referred to as a preemption channel access counter. The preemption channel access counter may be referred to simply as a counter. The counter may refer to a counter value.

Each of the STA1, STA2, and/or AP2 may compare the selected counter with a threshold. The threshold may be indicated by the threshold information included in the DL PPDU of the AP1. The threshold information may be included in the preemption information included in the MAC header of the DL PPDU. If the selected counter is greater than or equal to the threshold, each of the STA1, STA2, and/or AP2 may determine to transmit a frame (e.g., LL frame, LL PPDU) within an XIFS (e.g., an interval between DL PPDUs transmitted by the AP1), and may transmit the frame based on the determination. If the selected counter is less than the threshold, each of the STA1, STA2, and/or AP2 may not transmit a frame within the XIFS. As another method, if the selected counter is less than or equal to the threshold, each of the STA1, STA2, and/or AP2 may determine to transmit a frame (e.g., LL frame, LL PPDU) within the XIFS (e.g., interval between DL PPDUs transmitted by the AP1), and may transmit the frame based on the determination. If the selected counter is greater than the threshold, each of the STA1, STA2, and/or AP2 may not transmit a frame within the XIFS.

The transmission operation of the frame (e.g., LL frame, LL PPDU) may be performed immediately at a start time of each XIFS (e.g., reception end time of the DL PPDU of the AP1). Alternatively, the transmission operation of the frame (e.g., LL frame, LL PPDU) may be performed after a predefined time (e.g., aSlotTime) from a start time of each XIFS (e.g., reception end time of the DL PPDU of the AP1).

The length of XIFS may be aSIFSTime + N x aSlotTime. In other words, the length of XIFS may be SIFS + N slot times. For example, the XIFS may be the same time as PIFS. Alternatively, the XIFS may be greater than PIFS. Alternatively, XIFS may be equal to or less than SIFS.

The AP1 may provide the probability information (e.g., p information) to the STA1, STA2, and/or AP2. The probability information may be included in the DL PPDU transmitted by the AP1. The STA1, STA2, and/or AP2 may receive the probability information from the AP1. The STA1, STA2, and AP2 may determine not to perform frame transmission within the first XIFS based on the probability information received from the AP1. The STA2 may determine to perform frame transmission within the second XIFS based on the probability information received from the AP1, and may transmit a frame (e.g., LL frame, LL PPDU) based on the determination. The STA1 and AP2 may determine not to perform frame transmission within the second XIFS based on the probability information received from the AP1. The AP2 may determine to perform frame transmission within the third XIFS based on the probability information received from the AP1, and may transmit a frame (e.g., LL frame, LL PPDU) based on the determination. The STA1 and STA2 may determine not to perform frame transmission within the third XIFS based on the probability information received from the AP1.

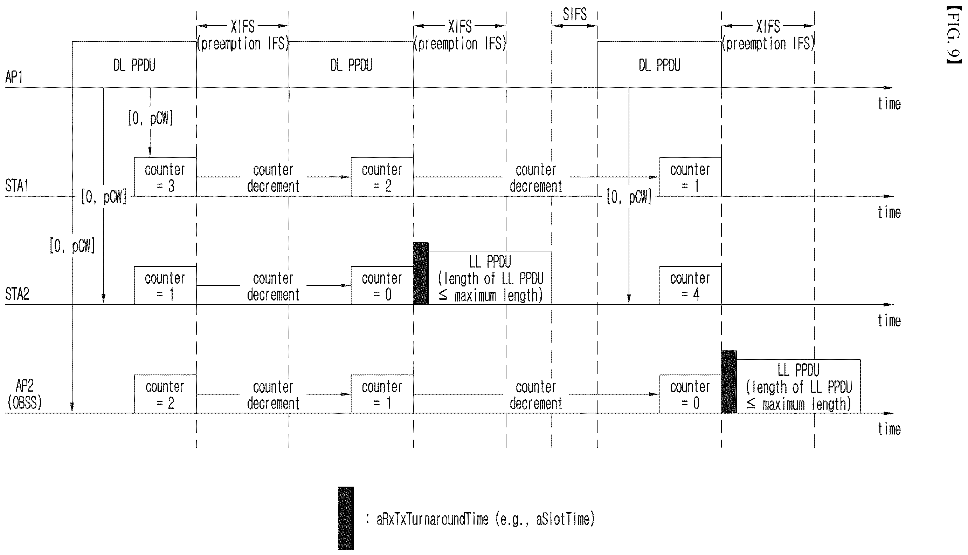

FIG. 9 is a timing diagram illustrating exemplary embodiments of a channel access method in preemption operation.

Referring to FIG. 9, an AP1, AP2, STA1, and/or STA2 may operate in a wireless LAN. The AP1, AP2, STA1, and/or STA2 may support preemption operations. In other words, preemption operations may be enabled in the wireless LAN. The AP1 may control (e.g., limit) preemption operations of other AP(s) and/or other STA(s). The STA1 and/or STA2 may be associated with the AP1. The AP1 and AP2 may operate in the same frequency (e.g., frequency band). The AP2 may be located in an overlapping basic service set (OBSS). In other words, the AP2 may be an OBSS AP2. The AP1 may perform a channel access procedure. In other words, the AP1 may contend for access to a medium. The channel access procedure may be an EDCA backoff procedure (e.g., random backoff procedure). If the channel access procedure (e.g., EDCA backoff procedure) is successful, the AP1 may obtain a TXOP capable of transmitting multiple frames, and may transmit DL PPDU(s) (e.g., PPDU(s), data frame(s)) within the TXOP. The DL PPDUs may be transmitted with an interval of XIFS for the preemption operation. The DL PPDUs may be transmitted sequentially. In other words, frame transmissions of the AP1 may be performed sequentially with the interval of XIFS.

The DL PPDU (e.g., MAC header of the PPDU) transmitted by the AP1 may include the preemption information as illustrated in FIG. 5. The preemption information may include at least one of pCW information, XIFS length information, or maximum time information. The maximum time information may indicate a maximum time during which transmission can be performed in the preemption operation. In other words, the maximum time information may indicate a maximum length of an LL frame that can be transmitted in the preemption operation.

The STA1, STA2, and/or AP2 may be communication nodes that wish to perform preemption operations. In other words, the STA1, STA2, and/or AP2 may have LL traffic to be transmitted. The STA1, STA2, and/or AP2 may receive the DL PPDU from the AP1, and may identify the preemption information (e.g., pCW information, XIFS length information, and/or maximum time information) included in the DL PPDU. The STA1, STA2, and/or AP2 may select an integer within a window [0, pCW] based on a uniform probability distribution (e.g., uniform random distribution). Since the pCW information is indicated by the PPDU transmitted by the AP1, the STA1, STA2, and/or AP2 may identify the window [0, pCW] based on the pCW information. The selected integer (e.g., backoff value) may be referred to as a preemption channel access counter. The preemption channel access counter may be simply referred to as a counter. The counter may refer to a counter value.

The STA1 may select 3 within the window [0, pCW], and the counter of the STA1 may be set to 3. The STA2 may select 1 within the window [0, pCW], and the counter of the STA2 may be set to 1. The AP2 may select 2 within the window [0, pCW], and the counter of the AP2 may be se to 2. Each of the STA1, STA2, and/or AP2 may decrement the counter by 1 at a preconfigured unit. For example, each of the STA1, STA2, and/or AP2 may decrement the counter by 1 after reception of a DL PPDU of the AP1 is terminated. The preconfigured unit (e.g., counting unit) may be a frame transmission (e.g., reception of a DL PPDU) of the AP1. When the counter reaches 0, the communication node having the counter 0 may initiate transmission (e.g., frame transmission) within an XIFS from an end time (e.g., end time point) of a DL PPDU received from the AP1. The length of the XIFS may be indicated by the DL PPDU of the AP1.

For example, the counter of the STA2 may reach 0. In this case, the STA2 may transmit an LL PPDU (e.g., LL frame, uplink frame) to the AP1 after at least aRxTxTurnaroundTime (e.g., at least aSlotTime) after an end time of the DL PPDU received from the AP1. aRxTxTurnaroundTime may be a time required to switch a radio of the communication node (e.g., AP, STA) from a transmission mode to a reception mode or a time required to switch the radio of the communication node (e.g., AP, STA) from the reception mode to the transmission mode. In other words, aRxTxTurnaroundTime may be a time required for switching the operation mode of the communication node (e.g., 'transmission mode → reception mode' or 'reception mode → transmission mode'). As another method, when the counter of the STA2 reaches 0, the STA2 may transmit an LL PPDU to the AP1 immediately after the end time of the DL PPDU received from the AP1. In other words, the STA2 may transmit the LL PPDU to the AP1 without waiting as long as aRxTxTurnaroundTime from the end time of the frame received from the AP1. As another method, when the counter of the STA 2 reaches 0, the STA 2 may transmit an LL PPDU to the AP1 after a SIFS from the end time (e.g., end time point) of the DL PPDU received from the AP1. In this case, the XIFS may be greater than the SIFS.

The length of the LL frame of the STA2 may not exceed the maximum length (e.g., maximum time) indicated by the maximum time information included in the DL PPDU of the AP1. The maximum time information may only limit the length of LL frame(s) transmitted by the STA2. The STA2 may generate an LL frame shorter than or equal to the maximum length indicated by the AP1 and transmit the generated LL frame. As another method, a sum of a time required for transmission of the LL frame of the STA2 and a time required for reception of a response frame to the LL frame may not exceed the maximum time (e.g., maximum length) indicated by the maximum time information included in the DL PPDU of the AP1. The maximum time information may limit a time for transmission and reception of the LL frame of the STA 2 and the response frame to the LL frame.

After transmission of the LL PPDU is completed, the STA 2 may reselect a counter within the window [0, pCW]. The reselection operation of the counter may be performed when the preemption operation is required. If the preemption operation is not required (e.g., no LL traffic exists), the STA2 may not perform the reselection operation of the counter.

The AP1 may receive the LL PPDU from the STA2. After reception of the LL PPDU of the STA2 is completed, the AP1 may transmit a DL PPDU, and the counter of the AP2 may reach 0 after a reception end time of the DL PPDU. In this case, the AP2 may transmit an LL PPDU (e.g., LL frame) to the AP1 or STA(s) associated with (e.g., connected to) the AP2 after at least aRxTxTurnaroundTime (e.g., at least aSlotTime) after the end time (e.g., end time point) of the DL PPDU received from the AP1. As another method, the AP2 may transmit an LL PPDU (e.g., LL frame) to the AP1 or STA(s) associated with (e.g., connected to) the AP2 immediately after the end time of the DL PPDU received from the AP1.

The length of the LL frame of the AP2 may not exceed the maximum length (e.g., maximum time) indicated by the maximum time information included in the DL PPDU of the AP1. The maximum time information may only limit the length of the LL frame(s) transmitted by the AP2. The AP2 may generate an LL frame shorter than or equal to the maximum length indicated by the AP1 and transmit the generated LL frame. As another method, a sum of a time required for transmission of the LL frame of the AP2 and a time required for reception of a response frame to the LL frame may not exceed the maximum time (e.g., maximum length) indicated by the maximum time information included in the DL PPDU of the AP1. The maximum time information may limit a time for transmission and reception of the LL frame of the AP2 and the response frame to the LL frame.

The present disclosure may be applied when the preemption operation is performed identically or similarly to the exemplary embodiments of FIGS. 6 to 9. Alternatively, the present disclosure may be applied when the preemption operation is not performed similarly to the exemplary embodiments of FIGS. 6 to 9. When another communication node (e.g., AP and/or STA) wishes to transmit an LL frame in an interval between frames transmitted by the AP1, the exemplary embodiments according to the present disclosure (e.g., methods of limiting the length of the LL frame by the maximum time information) may be used.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a first communication node, comprising:

   receiving a first frame including preemption information from an access point (AP);
   selecting a counter value based on contention window (CW) information included in the preemption information;
   decrementing the counter value at a preconfigured unit; and
   transmitting a first low latency (LL) frame when the counter value reaches 0.

2. The method according to claim 1, wherein the selecting of the counter value comprises:

   identifying a window [0, preemption contention window (pCW)] based on the CW information; and
   selecting the counter value within the window [0, pCW],
   wherein pCW is a CW configured for preemption operations.

3. The method according to claim 1, wherein the transmitting of the first LL frame comprises: transmitting the first LL frame after a preset time from an end time of a frame received from the AP,

wherein the preset time is a time required to switch an operation mode of the first communication node from a transmission mode to a reception mode or a time required to switch the operation mode of the first communication node from the reception mode to the transmission mode.

4. The method according to claim 1, further comprising:

in response to LL traffic existing in the first communication node after transmission of the first LL frame, selecting a new counter value based on the CW information; and

decrementing the new counter value at the preconfigured unit in order to transmit the LL traffic.

5. The method according to claim 1, wherein the preconfigured unit is a frame transmission of the AP or aSlotTime.

6. The method according to claim 1, wherein the first LL frame is transmitted in an interval between frame transmissions of the AP.

7. The method according to claim 1, wherein the first LL frame is transmitted within an X interframe space (XIFS) from an end time of a frame received from the AP.

8. The method according to claim 7, wherein a length of the XIFS is indicated by length information included in the preemption information.

9. The method according to claim 1, wherein the counter value is maintained when a second LL frame of a second communication node is transmitted before transmission of the first LL frame, and the counter value is decremented again at the preconfigured unit after termination of transmission of the second LL frame.

10. The method according to claim 1, wherein a length of the first LL frame is less than or equal to a maximum length indicated by maximum length information included in the preemption information.

11. A method of a first communication node, comprising:

receiving a first frame including preemption information from an access point (AP);
identifying probability information included in the preemption information;
determining whether to transmit a first low latency (LL) frame based on the probability information; and
in response to determining to transmit the first LL frame, transmitting the first LL frame.

12. The method according to claim 11, wherein the determining of whether to transmit the first LL frame comprises:

determining a unique probability based on the probability information and unique information of the first communication node; and

comparing the unique probability with a threshold indicated by threshold information included in the preemption information,

wherein the first LL frame is determined to be transmitted when the unique probability is greater than or equal to the threshold, and the first LL frame is determined not to be transmitted when the unique probability is less than the threshold.

13. The method according to claim 11, wherein the transmitting of the first LL frame comprises: transmitting the first LL frame after a preset time from an end time of the first frame received from the AP,

wherein the preset time is a time required to switch an operation mode of the first communication node from a transmission mode to a reception mode or a time required to switch the operation mode of the first communication node from the reception mode to the transmission mode.

14. The method according to claim 11, wherein the first LL frame is transmitted within an X interframe space (XIFS) from an end time of the first frame received from the AP.

15. The method according to claim 14, wherein a length of the XIFS is indicated by length information included in the preemption information.

16. The method according to claim 11, wherein a length of the first LL frame is less than or equal to a maximum length indicated by maximum length information included in the preemption information.

17. A first communication node comprising a processor, wherein the processor causes the first communication node to perform:

receiving a first frame including preemption information from an access point (AP);
selecting a counter value based on contention window (CW) information included in the preemption information;
decrementing the counter value at a preconfigured unit; and
transmitting a first low latency (LL) frame when the counter value reaches 0.

18. The first communication node according to claim 17, wherein in the selecting of the counter value, the processor causes the first communication node to perform:

identifying a window [0, preemption contention window (pCW)] based on the CW information; and
selecting the counter value within the window [0, pCW],
wherein pCW is a CW configured for preemption operations.

19. The first communication node according to claim 17, wherein in the transmitting of the first LL frame, the processor causes the first communication node to perform: transmitting the first LL frame after a preset time from an end time of a frame received from the AP,
wherein the preset time is a time required to switch an operation mode of the first communication node from a transmission mode to a reception mode or a time required to switch the operation mode of the first communication node from the reception mode to the transmission mode.

20. The first communication node according to claim 17, wherein the first LL frame is transmitted within an X interframe space (XIFS) from an end time of a frame received from the AP.

【FIG. 1】

【FIG. 2】

200

220

memory

| ROM | RAM |

210

processor

270

input
interface
device ~240

output
interface
device ~250

storage
device ~260

transceiver ~230

【FIG. 3】

【FIG. 4】

STA                                                                      AP

exchange information
on available links
     probe request
     probe response

configure candidate
links having on-off
switches (configure a
primary link in the
association procedure)
     association request
     association response

frame transmission/reception through a
multi-link operation

on-off switching &
reselection of the
primary link
     multi-link request
     multi-link response

【FIG. 5】

| MAC header | Body | FCS |
| --- | --- | --- |

| . . . | HT control (A-control) |
| --- | --- |

A-control (preemption control)

| control ID | preemption | final PPDU | RBO CW | maximum time | XIFS length |
| --- | --- | --- | --- | --- | --- |

[FIG. 6]

EP 4 742 811 A1

22

: aRxTxTurnaroundTime (e.g., aSlotTime)

【FIG. 7】

**[FIG. 8]**

**EP 4 742 811 A1**

AP1 ──────────────────── time

| XIFS (preemption IFS) (first XIFS) | XIFS (preemption IFS) (second XIFS) | SIFS | XIFS (preemption IFS) (third XIFS) |

DL PPDU    DL PPDU    DL PPDU

STA1 ──────────────────── time

p    Not Tx    p    Not Tx    p    Not Tx

STA2 ──────────────────── time

p    Not Tx    p    Tx | LL PPDU    p    Not Tx

AP2 (OBSS) ──────────────────── time

p    Not Tx    Not Tx    Tx | LL PPDU

▮ : aRxTxTurnaroundTime (e.g., aSlotTime)

[FIG. 9]

: aRxTxTurnaroundTime (e.g., aSlotTime)

# EP 4 742 811 A1

## INTERNATIONAL SEARCH REPORT

| International application No. |
|---|
| **PCT/KR2024/008295** |

---

**A.   CLASSIFICATION OF SUBJECT MATTER**

**H04W 74/08**(2009.01)i; **H04W 74/0833**(2024.01)i; **H04L 69/324**(2022.01)i; **H04W 84/12**(2009.01)i; **H04W 74/0816**(2024.01)i; **H04W 72/50**(2023.01)i

According to International Patent Classification (IPC) or to both national classification and IPC

**B.   FIELDS SEARCHED**

Minimum documentation searched (classification system followed by classification symbols)

H04W 74/08(2009.01); H04L 27/00(2006.01); H04L 47/2475(2022.01); H04L 47/28(2022.01); H04L 5/00(2006.01); H04W 72/512(2023.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: preemption, contention window, counter value, LL(low latency) frame, pCW, aSlotTime, xIFS, length, probability, threshold

**C.   DOCUMENTS CONSIDERED TO BE RELEVANT**

| Category* | Citation of document, with indication, where appropriate, of the relevant passages | Relevant to claim No. |
|---|---|---|
| Y | US 2023-0208774 A1 (INTEL CORPORATION) 29 June 2023 (2023-06-29)<br>See paragraphs [0051]-[0071]; claims 1 and 5; and figure 4B. | 1-20 |
| Y | US 2023-0058825 A1 (HUAWEI TECHNOLOGIES CO., LTD.) 23 February 2023 (2023-02-23)<br>See paragraphs [0118]-[0190]; claim 1; and figure 2. | 1-10,17-20 |
| Y | FANG, Juan et al. Preemption for Low Latency Application. IEEE 802.11-23/0092r0. 15 March 2023.<br>See slide 5. | 3,6-8,13-15,19-20 |
| Y | EP 3240223 B1 (ZTE CORPORATION) 07 July 2021 (2021-07-07)<br>See claims 1 and 5. | 11-16 |
| A | WO 2023-111177 A1 (SONY GROUP CORPORATION) 22 June 2023 (2023-06-22)<br>See claims 1-20. | 1-20 |

☐ Further documents are listed in the continuation of Box C.          ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **10 October 2024** | **11 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/008295**

| Patent document cited in search report | | | Publication date (day/month/year) | Patent family member(s) | | | Publication date (day/month/year) |
|---|---|---|---|---|---|---|---|
| US | 2023-0208774 | A1 | 29 June 2023 | None | | | |
| US | 2023-0058825 | A1 | 23 February 2023 | AU | 2015-396027 | A1 | 21 December 2017 |
| | | | | AU | 2015-396027 | B2 | 07 February 2019 |
| | | | | BR | 112017025380 | A2 | 07 August 2018 |
| | | | | BR | 112017025380 | B1 | 26 December 2023 |
| | | | | CA | 2987288 | A1 | 01 December 2016 |
| | | | | CA | 2987288 | C | 27 October 2020 |
| | | | | CA | 3091314 | A1 | 01 December 2016 |
| | | | | CA | 3091314 | C | 02 August 2022 |
| | | | | CN | 107535006 | A | 02 January 2018 |
| | | | | CN | 107535006 | B | 16 October 2020 |
| | | | | EP | 3294036 | A1 | 14 March 2018 |
| | | | | EP | 3294036 | A4 | 18 April 2018 |
| | | | | EP | 3294036 | B1 | 02 September 2020 |
| | | | | EP | 3790349 | A1 | 10 March 2021 |
| | | | | EP | 3790349 | B1 | 14 February 2024 |
| | | | | ES | 2833536 | T3 | 15 June 2021 |
| | | | | JP | 2018-516021 | A | 14 June 2018 |
| | | | | JP | 6696637 | B2 | 20 May 2020 |
| | | | | KR | 10-2018-0002850 | A | 08 January 2018 |
| | | | | KR | 10-2020-0000498 | A | 02 January 2020 |
| | | | | KR | 10-2193063 | B1 | 18 December 2020 |
| | | | | KR | 10-2231453 | B1 | 23 March 2021 |
| | | | | MX | 2017015216 | A | 20 April 2018 |
| | | | | MY | 198100 | A | 01 August 2023 |
| | | | | RU | 2669586 | C1 | 12 October 2018 |
| | | | | US | 10536988 | B2 | 14 January 2020 |
| | | | | US | 11523466 | B2 | 06 December 2022 |
| | | | | US | 11700668 | B2 | 11 July 2023 |
| | | | | US | 2018-0084605 | A1 | 22 March 2018 |
| | | | | US | 2020-0137829 | A1 | 30 April 2020 |
| | | | | WO | 2016-187853 | A1 | 01 December 2016 |
| | | | | ZA | 201708149 | B | 25 May 2022 |
| EP | 3240223 | B1 | 07 July 2021 | CN | 105722222 | A | 29 June 2016 |
| | | | | CN | 105722222 | B | 17 August 2021 |
| | | | | EP | 3240223 | A1 | 01 November 2017 |
| | | | | ES | 2882817 | T3 | 02 December 2021 |
| | | | | WO | 2016-101802 | A1 | 30 June 2016 |
| WO | 2023-111177 | A1 | 22 June 2023 | None | | | |

Form PCT/ISA/210 (patent family annex) (July 2022)